Europäisches Patentamt

European Patent Office

Office européen des brevets

(19)

(11) EP 0 514 986 B1

(12) **FASCICULE DE BREVET EUROPEEN**

(45) Date de publication et mention
de la délivrance du brevet:
**10.12.1997 Bulletin 1997/50**

(51) Int Cl.⁶: **G06F 15/80**

(21) Numéro de dépôt: **92201418.8**

(22) Date de dépôt: **19.05.1992**

(54) **Procédé d'apprentissage d'un réseau de neurones et dispositif de classification pour la mise en oeuvre de ce procédé**

Lernverfahren für neuronales Netzwerk und Klassifizieranlage zum Anwenden dieses Verfahrens

Learning method for a neural network and classification device using this method

(84) Etats contractants désignés:
**DE FR GB IT**

(30) Priorité: **24.05.1991 FR 9106278**
**19.07.1991 FR 9109134**

(43) Date de publication de la demande:
**25.11.1992 Bulletin 1992/48**

(73) Titulaires:
- **LABORATOIRES D'ELECTRONIQUE PHILIPS S.A.S.**
  **94450 Limeil-Brévannes (FR)**
  Etats contractants désignés:
  **FR**
- **Philips Electronics N.V.**
  **5621 BA Eindhoven (NL)**
  Etats contractants désignés:
  **DE GB IT**

(72) Inventeur: **Makram-Ebeid, Shérif**
**156, Boulevard Haussmann 75008 Paris (FR)**

(74) Mandataire: **Landousy, Christian et al**
**Société Civile S.P.I.D.**
**156, Boulevard Haussmann**
**75008 Paris (FR)**

(56) Documents cités:
**EP-A- 0 405 174**

- **IEEE INTERNATIONAL CONFERENCE ON NEURAL NETWORKS 1988, vol.1, 24 Juillet 1988, SAN DIEGO,CA,USA pages 425 - 430 HARTSTEIN 'A self-learning Threshold-controlled neural network'**
- **IJCNN INTERNATIONAL JOINT CONFERENCE ON NEURAL NETWORKS 1990, vol.3, 17 Juin 1990, SAN DIEGO,CA,USA pages 477 - 482 LEMMON 'Learning in competitively inhibited neural nets'**
- **RUMELHART 'Parallel Distributed Processing vol 1' 1986 , MIT PRESS , CAMBRIDGE,MA,USA * page 151, ligne 1 - page 152, ligne 15 ***

**Description**

La présente invention concerne un procédé d'apprentissage d'un réseau de neurones pour la classification de vecteurs en un certain nombre de classes. L'invention concerne également un dispositif de classification de vecteurs prévu pour la mise en oeuvre d'un tel procédé. Cette invention est utilisable dans de nombreux domaines, et notamment dans celui de la segmentation d'images.

Depuis quelques années, un nombre croissant de recherches approfondies ont été engagées dans le domaine du traitement de l'information à l'aide de réseaux de neurones. A l'inverse des ordinateurs qui fonctionnent de manière séquentielle et synchrone, un réseau de neurones, dans le cadre d'une interprétation neurobiologique, est censé fonctionner un peu à l'image du cerveau humain, avec un stockage des informations qui n'est plus limité à des mémoires spécifiques localisées mais qui au contraire se trouve réparti à travers le réseau. Les avantages des structures à base de réseaux de neurones sont alors essentiellement le traitement parallèle et asynchrone, la capacité d'apprentissage, une faible sensibilité au bruit, et une forte résistance aux pannes (du fait de la répartition des éléments porteurs de l'information).

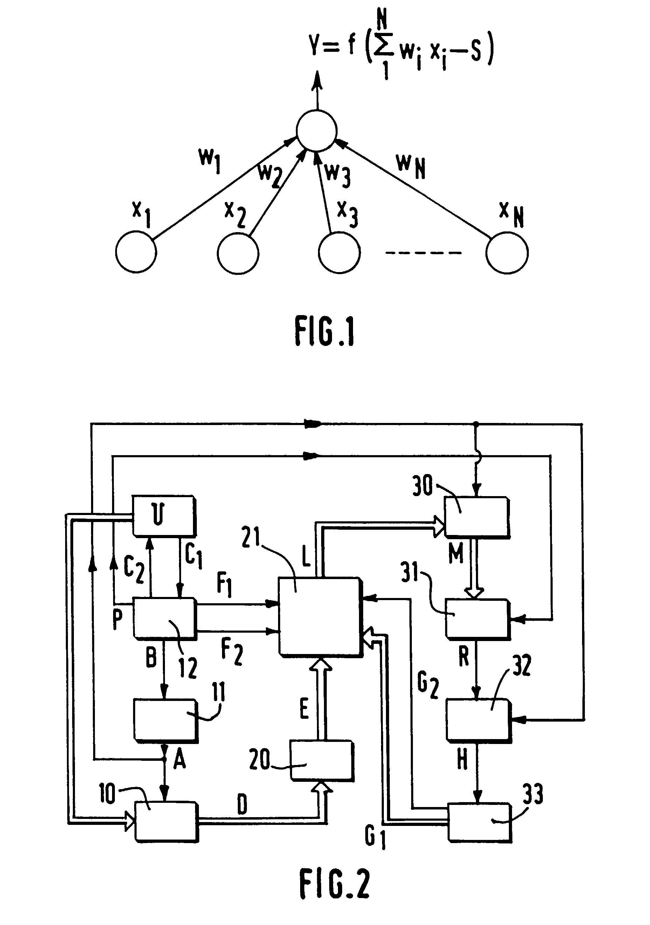

Un neurone, cellule élémentaire du réseau, est dans sa version la plus simple, comme le montre la représentation de la figure 1, un automate à seuil (donc non linéaire) délivrant un signal de sortie Y (encore appelé activation ou potentiel de sortie), dont l'amplitude dépend du résultat de la comparaison entre d'une part un seuil donné S et d'autre part une somme de signaux qui parviennent au neurone en provenance d'une série d'éléments (par exemple d'autres neurones) placés en amont et qui sont eux-mêmes formés à partir de signaux d'entrée $x_1, x_2,..., x_N$ pondérés par des coefficients respectifs $w_1, w_2,..., w_N$ dits coefficients synaptiques. Selon cette modélisation désormais traditionnelle, le neurone effectue donc une somme pondérée des potentiels d'action qui lui parviennent (c'est-à-dire de valeurs numériques représentant l'état des neurones ayant émis ces potentiels), puis s'active à son tour si cette somme pondérée dépasse un certain seuil, le neurone ainsi activé transmettant une réponse (un neurone non activé ne transmet rien) sous forme d'un nouveau potentiel d'action.

Parmi les types de réseaux de neurones les plus répandus, on distingue notamment les réseaux en couches, dans lesquels les neurones sont regroupés en couches successives où chaque neurone est connecté à tous les neurones de la couche suivante, l'information passant de la couche d'entrée aux éventuelles couches suivantes (couches alors dites cachées) jusqu'à la couche de sortie. De tels réseaux, dits multi-couches, s'avèrent particulièrement adaptés à la résolution de problèmes de classification. On peut en effet considérer toute une série d'exemples à classer, chaque exemple, défini par un ensemble de données, pouvant être qualifié de vecteur de données dans un hyper-espace et les données attachées à cet exemple constituant dans cet hyper-espace les coordonnées dudit vecteur. Compte tenu d'un vecteur d'entrée déterminé $\vec{X}$, on montre alors que les activations de sortie d'un réseau multi-couches fournissent des valeurs de probabilité a posteriori, notées $P(C/\vec{X})$, d'appartenance à différentes classes possibles, selon le vecteur d'entrée correspondant à chaque exemple.

Pour effectuer un traitement donné, un réseau de neurones doit cependant, au préalable, apprendre à l'effectuer, au cours d'une étape appelée apprentissage : dans un premier temps, comme le réseau de neurones, dont les caractéristiques ne sont pas encore adaptées à la tâche prévue, va délivrer des résultats erronés, on détermine une erreur sur les résultats obtenus, puis, à partir d'un critère de correction, on modifie les paramètres du réseau (seuils et coefficients synaptiques) pour permettre à celui-ci de s'adapter progressivement aux informations d'entrée qui lui sont soumises. Cette étape de correction est réitérée sur le nombre d'exemples (ou vecteurs d'entrée) considéré comme nécessaire pour un apprentissage satisfaisant du réseau.

Cette phase d'apprentissage, préalable à celle de fonctionnement normal du réseau, est dite supervisée lorsque l'erreur est évaluée par comparaison entre les résultats obtenus et ceux que l'on aurait dû obtenir, qui sont dans ce cas connus à l'avance, et que les paramètres du réseau de neurones sont modifiés en fonction de cet état connu des sorties désirées. Dans la suite de la description, l'apprentissage dont il est question est dit au contraire non supervisé, les résultats à obtenir n'étant pas connus à l'avance soit parce qu'une telle connaissance préalable n'est pas possible, soit parce que le coût pour y parvenir est trop élevé. Un apprentissage non supervisé implique donc que l'attribution d'une classe à chacun des vecteurs ou prototypes d'apprentissage doit se faire automatiquement, sans intervention humaine ni aucune connaissance préalable des sorties souhaitées. De nombreux documents ont décrit le principe de base de l'apprentissage non supervisé, par exemple les communications "Learning to recognize patterns without a teacher", IEEE-IT-13, n°1, janvier 1967, pp.57-64, ou "Optimal unsupervised learning multicategory dependant hypotheses pattern recognition", IEEE-IT-14, n°3, mai 1968, pp.468-470.

La phase de fonctionnement après apprentissage est alors une phase de généralisation, dans laquelle les paramètres du réseau de neurones, jugés corrects, sont figés. Au cours de cette phase, il est possible d'effectuer la classification d'autres prototypes que ceux de la base d'apprentissage, à chacun d'eux correspondant en effet un état des sorties qui permet sa classification. En bref, au cours d'une telle phase, il s'agit essentiellement d'opérer la partition d'un ensemble de vecteurs d'entrée $\vec{X}$ en différentes classes j = 1, 2, 3,..., K-1, K, le réseau de neurones devant à cet effet apprendre à délivrer pour chaque vecteur d'entrée (ou prototype) une activation qui, pour chaque neurone de sortie j, est l'estimation de la probabilité que ce prototype appartienne à une classe déterminée j.

Dans l'application ici choisie de la segmentation d'images, un certain nombre d'éléments d'images, ou "pixels", servent de prototypes-exemples et permettent d'extraire des images considérées des caractéristiques texturales ou autres. Le réseau va apprendre progressivement à classer ces prototypes-exemples, puis généralisera au classement d'autres pixels de l'image.

Un procédé d'apprentissage connu, dit des centres mobiles et particulièrement utilisé, est décrit notamment dans les articles "Cluster methodologies in exploratory data analysis", de R. Dubes et A.K. Jain, paru dans "Advances in Computing", vol. 19 (1980), pages 113-228, et "Discriminant analysis and clustering", paru dans "Statistical Science", vol.4 (1989), pages 34-69. Un tel procédé consiste à séparer progressivement l'espace des vecteurs d'entrée en plusieurs zones selon la proximité de ce vecteur par rapport à différents points autour desquels se forment progressivement les nuages de vecteurs correspondant aux différentes classes.

Le but de l'invention est de proposer un procédé d'apprentissage reposant non plus sur la formation de ces nuages autour de points qui en sont en quelque sorte les centres de gravité, mais sur la recherche des frontières entre ces nuages, c'est-à-dire de zones vides ou pratiquement vides de ces vecteurs d'entrée.

A cet effet, l'invention concerne un procédé d'apprentissage tel que défini dans le préambule et caractérisé en ce qu'il comprend les étapes suivantes :

(A) une étape d'identification stochastique par détermination, en réponse à une présentation successive aux entrées dudit réseau de vecteurs de test constituant une base d'apprentissage, de la configuration des activations de sortie du réseau respectivement associée à chacun desdits vecteurs de test et, en fonction de la corrélation mutuelle desdites configurations, affectation de chacun desdits vecteurs de test à l'une desdites classes ;
(B) une étape de renforcement de l'effet de classification consécutif aux configurations déterminées, par modification des paramètres opérationnels du réseau en réponse à un critère prédéterminé lié auxdites activations.

Dans un exemple particulier de mise en oeuvre, ce procédé est caractérisé en ce que, dans l'étape d'identification, la mise en corrélation mutuelle des activations de sortie de chaque configuration comprend les sous-étapes suivantes :

- définition de facteurs de pondération associés resepctivement à chaque classe en fonction des valeurs d'activation ;
- affectation des vecteurs de test à chaque classe à l'aide d'un tirage aléatoire dans lequel les probabilités d'affectation des vecteurs auxdites classes sont liées auxdits facteurs de pondération, et également caractérisé en ce que l'étape de renforcement comprend les sous-étapes suivantes :

- en réponse à une nouvelle présentation successive, mais en ordre aléatoire, des vecteurs de test ainsi classés aux entrées dudit réseau, nouvelle détermination de nouvelles configurations d'activations respectivement associées auxdits vecteurs de test ;
- pour chaque vecteur de test ainsi présenté, modification des paramètres du réseau en fonction desdites configurations et pour accroître les différences entre elles.

De manière avantageuse, le procédé selon l'invention est ici caractérisé en ce qu'en fin d'étape de renforcement, l'affectation définitive d'un vecteur de test à une classe respective est réalisée en fonction de la configuration respective dans laquelle au moins l'une des activations de sortie a une valeur supérieure aux autres activations de la même configuration.

En outre, dans l'exemple plus particulièrement décrit, ce procédé est caractérisé en ce que le critère prédéterminé lié aux activations comprend la comparaison de chaque activation de sortie desdites configurations respectives à un seuil.

Enfin, dans un mode de mise en oeuvre particulièrement avantageux, le procédé est caractérisé en ce l'ensemble des étapes d'identification et de renforcement est précédé d'une étape de prétraitement par transformation de l'espace des vecteurs de test en un espace de dimensions finies.

L'invention concerne aussi, pour la mise en oeuvre de ce procédé, un dispositif de classification de vecteurs caractérisé en ce qu'il comprend :

- un réseau de neurones comprenant des entrées pour la présentation successive desdits vecteurs, des sorties pour la fourniture correspondante d'activations de sortie de telle sorte qu'une configuration d'activations soit obtenue sur lesdites sorties en association à un vecteur présent sur lesdites entrées, et une mémoire de stockage des paramètres opérationnels dudit réseau ;
- des moyens d'identification par voie stochastique, reliés auxdites sorties d'une part pour la fourniture, en réponse à une mise en corrélation mutuelle des activations de sortie de chaque configuration, de facteurs de pondération associés respectivement à chaque classe possible pour lesdits vecteurs et d'autre part pour l'affectation de chaque vecteur à une classe à l'aide d'un tirage aléatoire dans lequel les probabilités d'affectation des vecteurs auxdites classes sont liées auxdits facteurs de pondération ;
- des moyens de renforcement de l'effet de classification consécutif auxdites configurations d'activations, reliés à ladite mémoire de stockage des paramètres opérationnels pour modifier ceux-ci en réponse à un critère prédéterminé lié auxdites activations.

La communication "A neural unsupervised learning technique", faite par A.F. Atiya, Department of Electrical Engineering, California Institute of Technology, Pasadena, Ca91125 USA, lors du premier symposium organisé par la revue "The official journal of the International Neural Network Society" à Boston, 6-10 septembre 1988, décrit un apprentissage non supervisé conduisant, comme dans le cas de l'invention, à un renforcement de l'effet de classification par détermination de régions de l'espace dans lesquelles les vecteurs d'entrée, ou prototypes, ont une densité aussi faible que possible, mais cette détermination est réalisée par des étapes de modification des paramètres opérationnels du réseau de neurones qui diffèrent de celles du procédé et du dispositif ici décrits. En effet, dans le procédé selon ce document, la partition de l'espace des vecteurs d'entrée est réalisée en suivant un processus qui fait appel à un arbre binaire : à chaque étape de l'apprentissage, il y a séparation d'une partie de l'espace d'origine des vecteurs d'entrée en deux classes. On ne s'occupe donc, à chaque étape, que d'une petite partie du problème de partition. Cet inconvénient, conjugué à celui du fait que l'approche n'est pas stochastique, entraîne une probabilité non négligeable d'aboutir à une partition finale de l'espace des vecteurs d'entrée qui n'est pas optimale.

Au contraire, dans le cas de l'invention, le choix des classes est effectué de façon stochastique, avec, associée à chaque classe, une probabilité d'être choisie. Ainsi le réseau de neurones peut-il effectuer son apprentissage avec, pour sorties désirées, les valeurs résultant de ce choix stochastique, renouvelé après une ou plusieurs époques d'apprentissage jusqu'à ce que l'apprentissage soit achevé.

Les particularités du procédé et du dispositif selon l'invention seront maintenant précisées de façon plus détaillée dans la description ci-après et dans les dessins annexés, donnés à titre d'exemple non limitatif dans le cas du type d'application cité plus haut et dans lesquels :

- la figure 1 est une représentation classique d'un neurone formel ;
- la figure 2 montre un exemple de réalisation d'un dispositif de classification selon l'invention.

La segmentation d'image consiste, on le sait, à tenter d'extraire d'une image des régions d'intérêt majeur. Par exemple, dans le cas d'images en provenance de satellites, les régions correspondent à différents types de terrains tels que zones urbaines, régions boisées, terres agricoles, réseau hydrographique, etc.. (en général, pour réduire de façon significative la dimensionnalité du problème à résoudre et concentrer l'information en un petit nombre de paramètres, certaines caractéristiques de texture connues pour leur pouvoir discriminatoire en matière de classification sont extraites localement avant d'être fournies au réseau de neurones). La couche d'entrée du réseau comprend alors un nombre d'entrées individuelles correspondant exactement au nombre de caractéristiques sélectionnées, tandis que le nombre de neurones en sortie du réseau est égal au nombre de types de texture dans l'image. Ainsi, après la phase d'apprentissage, le réseau de neurones est capable d'opérer la classification de zones d'image suivant l'une des classes de texture sur lesquelles il a été entraîné, cette classe correspondant à celui des neurones de sortie dont l'activité est la plus élevée, c'est-à-dire qui donne la réponse la plus significative pour chacune des valeurs d'entrée.

On va tout d'abord décrire le procédé d'apprentissage neuronal lui-même, pour la mise en oeuvre duquel l'utilisateur dispose d'une base d'apprentissage. Cette base est constituée d'un ensemble de V vecteurs de test (ou prototypes) constitués chacun de N caractéristiques d'un prototype d'objet, et ces V vecteurs, de dimension N et de classe inconnue, doivent être classés en un certain nombre de classes inférieur ou égal à un nombre maximal de classes K fixé par l'utilisateur, K étant bien entendu inférieur -ou égal- à V. On suppose d'autre part que l'on dispose d'un réseau de neurones à N+1 entrées et à K sorties (il y a donc N+1 entrées individuelles dans la première couche du réseau, et K neurones dans sa dernière couche).

La fonction non linéaire attachée à chaque neurone est, dans le cas présent, de la forme arctan, et la sortie d'un neurone de sortie (quelconque) est donnée par la formule suivante (où $Y_i$ va donc varier entre -1 et 1) :

$$Y_i = \frac{2}{\pi} \arctan \left( \frac{2}{\pi} . \frac{\vec{W_i} . \vec{X} - S_i}{T_i} \right)$$

dans laquelle :
$\vec{X}$ est le vecteur représentant le motif d'entrée, $\vec{W_i}$ est le vecteur-poids associé au neurone de sortie de rang i, $S_i$ est un seuil associé, et $T_i$ est un coefficient de sensibilité du neurone concerné aux entrées, encore appelé température (par analogie avec certaines expériences thermodynamiques - les recuits - au cours desquelles les températures servent de paramètres de contrôle, les fortes températures permettant le nivellement des différentes sorties $Y_i$, et l'abaissement de ces températures permettant au contraire de retrouver davantage de sensibilité).

Avant présentation au réseau de neurones, chacun des vecteurs de test, ou vecteurs-prototypes, dont l'expression peut être écrite (t indiquant la transposition matricielle et v le numéro d'ordre du vecteur-prototype concerné) :

$$\vec{X}(v) = \{x_1, x_2, ..., x_N\}^t$$

subit ici deux transformations. La première de celles-ci est la suivante : chacune des dimensions $x_1$, $x_2$, ..., $x_N$ desdits vecteurs-prototypes est ramenée à une échelle unité -ou normalisée- par une simple transformation affine, de façon par exemple que sa moyenne soit nulle et sa variance égale à l'unité.

En ce qui concerne la deuxième de ces transformations, on a vu plus haut que, du fait de la comparaison à un seuil, chaque neurone de sortie était capable de séparer l'espace des entrées en deux classes, c'est-à-dire en deux demi-espaces non bornés séparés par un hyperplan séparateur. La deuxième transformation subie a pour objet de permettre la séparation de cet espace des vecteurs de test en un espace de dimensions finies, et ce en effectuant un prétraitement qui consiste à ajouter une dimension supplémentaire à l'espace des entrées : chaque vecteur-prototype $\vec{X}(v)$ de dimension N est transformé en un vecteur de dimension (N+1) en lui ajoutant cette dimension supplémentaire sous la forme d'une composante fixe h (de valeur égale à ou de l'ordre de l'unité si la normalisation a été effectuée selon l'exemple précédent). Ces deux transformations conduisent à ce que l'on présente désormais aux (N+1) entrées individuelles du réseau de neurones les grandeurs suivantes :

(a) aux N premières entrées du réseau, les N premières composantes du vecteur-prototype transformé, ce nouveau vecteur-prototype (celui qui sera maintenant présenté au réseau de neurones) étant noté :

$$\frac{\vec{X}(v)}{\sqrt{\left\|\vec{X}(v)^2\right\| + h^2}}$$

(b) à la (N+1)ième entrée du réseau, la (N+1)ième composante, notée :

$$\frac{h}{\sqrt{\left\|\vec{X}(v)^2\right\| + h^2}}$$

Dans ces expressions, la grandeur $\sqrt{\left\|\vec{X}(v)^2\right\| + h^2}$ présente au dénominateur est la norme globale du vecteur-prototype de dimension (N+1) ci-dessus créé (cette opération est équivalente à une projection de tous les points de l'hyperplan des vecteurs-prototypes d'entrée sur une hypersphère). Enfin, les poids (ou coefficients synaptiques) et les seuils du réseau de neurones sont initialisés au hasard, les normes des vecteurs synaptiques de chacun des neurones sont fixées à 1, en calculant la valeur courante du vecteur synaptique (ou vecteur "poids") $\vec{W}_i$ de chaque neurone de sortie et en divisant ce vecteur "poids" et le vecteur "seuil" de ce neurone par la norme $\|\vec{W}_i\|$, et les températures sont initialisées à des valeurs voisines de 1. Après ces opérations, le réseau est prêt pour la phase d'apprentissage.

Cette phase comprend tout d'abord une étape dite d'identification stochastique par détermination, en réponse à une présentation successive, aux entrées dudit réseau, des vecteurs de test, de la configuration des activations de sortie du réseau respectivement associée à chacun desdits vecteurs de test et, en fonction de la corrélation mutuelle desdites configurations, affectation de chacun desdits vecteurs de test à l'une desdites classes. Cette étape est réalisée en passant en revue tous les vecteurs de test de la base d'apprentissage pour déterminer la classe de chacun d'eux, selon un professeur stochastique comme on va le voir (c'est-à-dire en faisant appel à un processus de tirage aléatoire).

Tout d'abord, pour l'un quelconque v des vecteurs de ladite base (ayant subi comme on l'a décrit les opérations de passage à la dimension N+1 et de fixation de norme), et en utilisant un générateur de nombres aléatoires, on tire au hasard, parmi les K classes, une classe k(v) que l'on associe au vecteur de numéro d'ordre v, avec une probabilité $P(k(v) = i)$ d'attribuer à k(v) une des valeurs possibles i, ladite probabilité étant ici définie selon l'expression suivante :

$$P(k(v) = i) = \frac{1 + Y_i(v)}{K + \sum_1^K Y_j(v)}$$

avec i et j variant de 1 à K, et $Y_{i(v)}$ représentant l'activation de la i-ième sortie du réseau de neurones. Ces probabilités d'affectation des vecteurs auxdites classes sont d'une manière générale respectivement liées à des facteurs de pondération définis préalablement et qui sont associés respectivement à chaque classe en fonction des valeurs d'activation observées dans les configurations successives correspondant à la présentation de chacun des vecteurs de test.

Dans la phase d'apprentissage, cette étape d'identification stochastique est alors suivie d'une étape de renforcement de l'effet de classification consécutif aux configurations déterminées, par modification des paramètres opérationnels du réseau en réponse à un critère prédéterminé lié auxdites activations. Cette modification de paramètres intervient en réponse à une nouvelle présentation successive, mais en ordre aléatoire, des vecteurs de test qui viennent d'être classés dans l'étape précédente. En effet, à la suite de cette nouvelle présentation aux entrées du réseau, de nouvelles configurations d'activations sont associées aux vecteurs de test, l'affectation définitive d'un vecteur de test à une classe étant ici réalisé en fonction de celle des configurations dans laquelle au moins l'une des activations de sortie a une valeur supérieure aux autres. Ladite modification de paramètres a pour objectif et pour effet, selon l'invention, d'accroître les différences entre ces configurations d'activations de sortie.

Dans l'exemple ici décrit, on procède, plus précisément, de la façon suivante. Tout d'abord, on définit des sorties dites idéales et notées :

$$Y_{i(v)} = Y'_i = +1, \text{ si } k(v) = i$$

$$Y_{i(v)} = Y''_i = -1, \text{ si } k(v) \neq i$$

Pour chaque itération d'apprentissage, c'est-à-dire pour chaque vecteur de test de la base devenant successivement le vecteur de test courant, on évalue alors, en fonction des (N+1) entrées présentées au réseau, les activations de sorties $Y_{i(v)}$ de ce réseau, pour $i = 1, 2,...,$ K (K = nombre maximal de classes), et l'on décide, pour ledit vecteur de test courant de numéro d'ordre v, d'entreprendre une modification des paramètres opérationnels du réseau de neurones sous la forme de l'une des deux actions suivantes :

(a) soit une étape dite d'adaptation, par modification des poids et des seuils associés à chaque neurone, de manière à accentuer les différences entre les configurations d'activations $Y_{i(v)}$ en rapprochant leurs valeurs réellement obtenues des valeurs idéales $Y'_i$ ou $Y''_i$ définies ci-dessus, le taux d'apprentissage étant inversement proportionnel au nombre de vecteurs de test attribué à chaque classe ;
(b) soit une étape dite de désactivation par augmentation desdits seuils, de manière à rapprocher toutes les activations $Y_{i(v)}$ de la valeur minimale -1 (il s'agit donc là, en quelque sorte, d'une étape de désapprentissage, s'effectuant de manière similaire à l'apprentissage à cette exception près que les modifications sont des élévations des seuils, augmentant la proportion de désactivations des neurones de sortie).

Ces opérations d'adaptation ou de désactivation s'effectuent de préférence sans variations trop importantes des coefficients synaptiques : pour cela, on décide que lesdites opérations s'effectuent tout en gardant quasiment constante la norme (somme des carrés) desdits coefficients pour un neurone de sortie déterminé.

Ladite décision d'adaptation est prise en réponse à un critère déterminé lié aux activations de sortie, et par exemple par comparaison de chaque activation de sortie desdites configurations à un seuil, notamment lorsque le signe de $Y_{i(v)}$ est différent, pour au moins une des sorties $i = 1$ à K, de celui de la sortie idéale $Y'_i$ ou $Y''_i$ correspondante. Cette décision peut être prise par simple tirage au hasard lorsqu'au contraire ce signe de $Y_{i(v)}$ est le même que celui de ladite sortie idéale correspondante, et la décision de désactivation est alors prise à la suite dudit tirage au hasard (dans l'exemple ici décrit, la probabilité de la décision de désactivation est une valeur fixe P(anti) prise dans tout l'intervalle 0 - 1).

Après autant d'étapes d'adaptation ou de désactivation que de vecteurs de test dans la base d'apprentissage, on réduit ensuite les températures $T_i$ des neurones, par exemple en les multipliant par un même facteur inférieur à et voisin de l'unité, en vue d'une nouvelle époque d'apprentissage (on appelle époque d'apprentissage la période pendant laquelle on n'a présenté qu'une seule fois les V vecteurs de test de la base) comprenant à nouveau autant d'étapes que de vecteurs de test dans ladite base. La succession de telles époques d'apprentissage prend fin lors de la réalisation d'un événement déterminé, tel que, par exemple, le dépassement d'une valeur maximale du nombre d'époques d'apprentissage ou le passage d'un paramètre (valeur d'une erreur calculée, température d'un des neurones) au-dessous d'un seuil.

Bien entendu, les sorties $Y_{i(v)}$ du réseau de neurones pour les différents vecteurs de test définissent un nouvel ensemble de vecteurs de test de dimension K, et cet ensemble peut constituer les vecteurs d'entrée d'une nouvelle base d'apprentissage, pour une nouvelle mise en oeuvre du procédé d'apprentissage décrit précédemment, en vue du regroupement des vecteurs de test initiaux en un nombre de classes L inférieur à K.

Un dispositif pour la mise en oeuvre du procédé qui vient d'être détaillé dans ses différentes étapes est maintenant décrit, en se référant à la figure 2. Le dispositif représenté sur cette figure est organisé autour de trois éléments principaux, à savoir un réseau de neurones, des moyens d'identification par voie stochastique, reliés aux sorties de ce réseau de neurones, et des moyens de renforcement de l'effet de classification, prévus pour agir sur les paramètres opérationnels du réseau. Plus précisément, ce dispositif comprend ici, dans l'exemple décrit, tout d'abord une première mémoire 10 de stockage des vecteurs de test de la base d'apprentissage, ici une mémoire à accès aléatoire. Cette mémoire 10 est associée à un séquenceur 11, destiné notamment à définir (connexion A) de manière aléatoire l'ordre de présentation desdits vecteurs et lui-même commandé (connexion B) par un processeur maître 12 qui a pour fonction de définir et suivre le déroulement de la mise en oeuvre du procédé. Ce processeur maître 12 est par exemple un ordinateur séquentiel et reçoit de l'utilisateur U (connexion $C_1$) les informations de définition de la base d'apprentissage : nombre de vecteurs de test V, nombre maximal de classes K, dimension N des vecteurs d'entrée, et aussi les vecteurs de test dont le processeur maître 12 commande (connexion $C_2$) l'envoi dans la première mémoire 10.

Avant présentation au réseau de neurones, les vecteurs de test reçoivent, on l'a vu, une dimension supplémentaire, dans un processeur de prétraitement 20 recevant lesdits vecteurs par la connexion D. Le réseau de neurones est présent dans un processeur neuronal 21 qui reçoit (connexion E) la sortie du processeur de prétraitement 20, c'est-à-dire les vecteurs de test de dimension (N+1). Ce processeur neuronal 21 reçoit également, en provenance du processeur maître 12, un signal de décision (connexion $F_1$) concernant le mode de fonctionnement, ledit mode étant l'exécution soit de la phase de classification proprement dite, pendant laquelle est réalisée l'évaluation des K sorties du réseau de neurones dudit processeur neuronal 21 pour les (N+1) entrées données, soit de la phase d'apprentissage, pendant laquelle sont effectuées les opérations nécessaires pour rapprocher les sorties obtenues des sorties souhaitées et conduire ainsi à l'effet de renforcement des différences entre les configurations d'activations obtenues. Ces sorties souhaitées, envoyées vers le processeur neuronal 21 par la connexion $G_1$, sont définies à l'aide d'un processeur de détermination 33 délivrant également la décision d'adaptation ou la décision de désactivation (connexion $G_2$). Ce processeur 33 reçoit (connexion H) d'une deuxième mémoire des classes de vecteurs de test 32 la classe souhaitée pour chaque vecteur.

Une troisième mémoire 30, à accès aléatoire, est prévue en sortie (connexion L) du processeur neuronal 21 pour le stockage des K activations de sortie correspondant à chaque vecteur d'entrée, c'est-à-dire pour le stockage de vecteurs de sortie de dimension K. Les K activations ainsi obtenues sont fournies (connexion M) à un processeur stochastique 31 qui détermine à partir d'elles la classe de chaque vecteur de test, par tirage au hasard selon le procédé décrit précédemment. La mémoire 30 des activations de sortie et la mémoire 32 des classes de vecteurs de test reçoivent, comme la mémoire 10 et par la même connexion A, l'indication de l'ordre de présentation des vecteurs de test au réseau de neurones du processeur neuronal 21.

Le fonctionnement du dispositif ainsi constitué est le suivant. L'utilisateur U ayant introduit (connexion $C_1$) les diverses informations précisées plus haut, le processeur maître 12 initialise (connexion $F_2$) les températures des neurones, ici à une valeur élevée, voisine de 1, puis envoie (connexion B) un signal de commande au séquenceur 11 pour que celui-ci définisse un ordre de séquencement de tous les vecteurs de test présents dans la base d'apprentissage. Le processeur maître 12 impose en outre (connexion $F_1$) au processeur neuronal 21 le mode de fonctionnement "phase de classification". Pour chacun des V vecteurs de test de la base d'apprentissage présenté séquentiellement (après prétraitement dans le processeur 20) au processeur neuronal 21, le vecteur correspondant des K activations de sortie est évalué par ce processeur 21, puis stocké dans la troisième mémoire 30.

Ces activations de sortie étant ainsi évaluées et stockées sous la forme des vecteurs correspondants, le processeur stochastique 31 reçoit du processeur maître 12 (connexion P) un signal de commande lui ordonnant l'opération de détermination définitive des classes des V vecteurs de test. Les classes ainsi définies sont stockées (connexion R) dans la deuxième mémoire 32.

Le processeur maître 12 envoie alors (par la connexion B) un signal de commande portant l'ordre d'exécution d'une époque d'apprentissage (on le rappelle ici, à température des neurones déterminée) sur tous les vecteurs de test de la base et dans l'ordre défini précédemment pour ces vecteurs par le séquenceur 11, et impose (connexion $F_1$) au processeur neuronal 21 le mode de fonctionnement "apprentissage". Cette époque comprend, pour chaque vecteur de test v, l'ensemble des étapes décrites précédemment, à savoir présentation des vecteurs à l'entrée du processeur neuronal, affectation des vecteurs aux classes, et modification des paramètres opérationnels du réseau, par adaptation ou désactivation, en fonction des configurations d'activations obtenues.

Le même fonctionnement, c'est-à-dire la totalité des étapes décrites ci-dessus après celle d'initialisation des températures des neurones à une valeur voisine de 1, est alors repris plusieurs fois en réduisant progressivement les températures des neurones (connexion $F_2$), et ceci jusqu'à interruption de ce déroulement, soit lorsque le nombre d'itérations (époques d'apprentissage à température déterminée) dépasse une limite fixée à l'avance, soit lorsque ladite température des neurones passe au-dessous d'une valeur-limite prédéfinie.

## Revendications

1. Procédé d'apprentissage d'un réseau de neurones (21) pour la classification (R) de vecteurs en un certain nombre de classes, caractérisé en ce qu'il comprend les étapes suivantes :

   (A) une étape d'identification stochastique par détermination, en réponse à une présentation successive aux entrées (E) dudit réseau de vecteurs de test constituant une base d'apprentissage, de la configuration des activations de sortie du réseau respectivement associée à chacun desdits vecteurs de test et, en fonction de la corrélation mutuelle desdites configurations, affectation de chacun desdits vecteurs de test à l'une desdites classes ;
   (B) une étape ($F_1$, $F_2$) de renforcement de l'effet de classification consécutif aux configurations déterminées, par modification des paramètres opérationnels du réseau en réponse à un critère prédéterminé lié auxdites activations.

2. Procédé selon la revendication 1, caractérisé en ce que, dans l'étape d'identification, la mise en corrélation mutuelle des activations de sortie de chaque configuration comprend les sous-étapes suivantes :

   - définition de facteurs de pondération associés respectivement à chaque classe en fonction des valeurs d'activation ;

- affectation des vecteurs de test à chaque classe à l'aide d'un tirage aléatoire dans lequel les probabilités d'affectation des vecteurs auxdites classes sont liées auxdits facteurs de pondération.

3. Procédé selon l'une des revendications 1 et 2, caractérisé en ce que l'étape de renforcement comprend les sous-étapes suivantes :

- en réponse à une nouvelle présentation successive, mais en ordre aléatoire, des vecteurs de test ainsi classés aux entrées dudit réseau, nouvelle détermination de nouvelles configurations d'activations respectivement associées auxdits vecteurs de test ;
- pour chaque vecteur de test ainsi présenté, modification des paramètres du réseau en fonction desdites configurations et pour accroître les différences entre elles.

4. Procédé selon la revendication 3, caractérisé en ce qu'en fin d'étape de renforcement, l'affectation définitive d'un vecteur de test à une classe respective est réalisée en fonction de la configuration respective dans laquelle au moins l'une des activations de sortie a une valeur supérieure aux autres activations de la même configuration.

5. Procédé selon l'une des revendications 1 à 4, caractérisé en ce que le critère prédéterminé lié aux activations comprend la comparaison de chaque activation de sortie desdites configurations respectives à un seuil.

6. Procédé selon l'une des revendications 1 à 5, caractérisé en ce que l'ensemble des étapes d'identification et de renforcement est précédé d'une étape de prétraitement par transformation de l'espace des vecteurs de test en un espace de dimensions finies.

7. Dispositif de classification de vecteurs caractérisé en ce qu'il comprend :

- un réseau de neurones (21) comprenant des entrées (E) pour la présentation successive desdits vecteurs, des sorties (L) pour la fourniture correspondante d'activations de sortie de telle sorte qu'une configuration d'activations soit obtenue sur lesdites sorties en association à un vecteur présent sur lesdites entrées, et une mémoire de stockage des paramètres opérationnels dudit réseau ;
- des moyens (30,31) d'identification par voie stochastique, reliés auxdites sorties d'une part pour la fourniture, en réponse à une mise en corrélation mutuelle des activations de sortie de chaque configuration, de facteurs de pondération associés respectivement à chaque classe possible pour lesdits vecteurs et d'autre part pour l'affectation de chaque vecteur à une classe à l'aide d'un tirage aléatoire dans lequel les probabilités d'affectation des vecteurs auxdites classes sont liées audits facteurs de pondération ;

- des moyens (12) de renforcement de l'effet de classification consécutif auxdites configurations d'activations, reliés à ladite mémoire de stockage des paramètres opérationnels pour modifier ceux-ci en réponse à un critère prédéterminé lié auxdites activations.

8. Dispositif selon la revendication 7, caractérisé en ce que lesdits moyens d'identification comprennent eux-mêmes :

- des moyens de fourniture d'un nombre aléatoire à l'intérieur d'une gamme numérique prédéterminée ;
- des moyens de sélection de la classe d'affectation, par division de ladite gamme en intervalles consécutifs correspondant à chaque classe et respectivement proportionnels auxdits facteurs de pondération puis par sélection de la classe correspondant à celui des intervalles dans lequel se trouve le nombre aléatoire fourni.

**Patentansprüche**

1. Lernverfahren für neuronales Netzwerk (21) für die Klassifizierung (R) von Vektoren in eine gewisse Anzahl Klassen, mit dem Merkmal, daß es folgende Schritte enthält :

(A) Einen stochastischen Erkennungsschritt durch die Bestimmung, als Antwort auf aufeinanderfolgendes Präsentieren von eine Lerngrundlage darstellenden Testvektoren an den Eingängen (E) des besagten Netzes, der Konfiguration der Ausgangsaktivierungen des jeweiligen mit jedem der besagten Testvektoren verbundenen Netzes, abhängig von den gegenseitigen Verhältnissen der besagten Konfigurationen, und Zuteilung jedes der besagten Testvektoren an eine der besagten Klassen;
(B) einen Schritt ($F_1$, $F_2$) zur Verstärkung der aufeinanderfolgenden Klassifizierwirkung zu den bestimmten Konfigurationen durch die Änderung der Operationsparameter des Netzes als Antwort auf ein vorbestimmtes, mit den besagten Aktivierungen verbundenes Kriterium.

2. Verfahren laut Anspruch 1, mit dem Merkmal, daß beim Erkennungsschritt das Herstellen einer Wechselbeziehung zwischen den Ausgangsaktivierungen jeder Konfiguration folgende Unterschritte enthält :

- Definition der mit jeweils jeder Klasse verbundenen Bewertungsfaktoren, abhängig von den Aktivierungswerten;
- Zuteilung der Testvektoren zu jeder Klasse unter Zuhilfenahme einer Zufallsauswahl, bei der die Zuteilungswahrscheinlichkeiten der Voktoren zu den besagten Klassen mit den besagten Bewertungsfaktoren verbunden sind.

3. Verfahren laut einem der Ansprüche 1 und 2, mit dem Merkmal, daß der Verstärkungsschritt folgende Unterschritte enthält :

- Als Antwort auf ein neues aufeinanderfolgendes Präsentieren, allerdings in zufälliger Reihenfolge, der so zu den Eingängen des besagten Netzes klassifizierten Testvektoren, neue Bestimmung neuer Aktivierungskonfigurationen, jeweils mit den besagten Testvektoren verbunden;
- Für jeden so präsentierten Testvektor Änderung der Netzparameter, abhängig von den besagten Konfigurationen, für die Verstärkung des Unterschieds zwischen ihnen.

4. Verfahren laut Anspruch 3, mit dem Merkmal, daß am Schluß des Verstärkungsschritts die definitive Zuteilung eines Testvektors zu einer jeweiligen Klasse vorgenommen wird, abhängig von der jeweiligen Konfiguration, in der mindestens eine dieser Ausgangsaktivierungen einen zu den anderen Aktivierungen derselben Konfiguration höheren Wert hat.

5. Verfahren laut einem der Ansprüche 1 bis 4, mit dem Merkmal, daß das vorbestimmte, mit den Aktivierungen verbundene Kriterium den Vergleich jeder Ausgangsaktivierung der besagten jeweiligen Konfigurationen mit einer Schwelle aufweist.

6. Verfahren laut einem der Ansprüche 1 bis 5, mit dem Merkmal, daß die Gesamtheit der Erkennungs- und Verstärkungsschritte von einem Vorverarbeitungsschrit vorausgegangen wird, durch die Umwandlung des Testvektorraums in einen Raum fertiger Dimensionen.

7. Klassifizieranlage von Vektoren, dadruch charakterisiert, folgendes zu enthalten :

- Ein neuronales Netz (21) mit Eingängen (E) für die aufeinanderfolgende Präsentierung der besagten Vektoren, Ausgänge (L) für die entsprechende Bereitstelung von Ausgangsaktivierungen, derart, daß eine Aktivierungskonfiguration an den besagten Ausgängen in Verbindung mit einem an den besagten Eingängen vorhandenen Vektor erhalten wird, und einen Speicher zur Speicherung der Funktionsparameter des besagten Netzes;

- mit den besagten Ausgängen verbundene Mittel (30, 31) zur stochastischen Erkennung, einerseits als Antwort auf das Herstellen einer Wechselbeziehung zwischen den Ausgangsaktivierungen jeder Konfiguration für die Bereitstellung von Bewertungsfaktoren, jeweils mit jeder möglichen Klasse für die besagten Vektoren verbunden, und andererseits für die Zuweisung jedes Vektors zu einer Klasse unter Zuhilfenahme einer Zufallsauswahl, bei der die Zuteilungswahrscheinlichkeiten der Vektoren zu den besagten Klassen mit den besagten Bewertungsfaktoren verbunden sind;
- Mittel (12) zur Verstärkung des aufeinanderfolgenden Klassifiziereffekts bei den besagten Aktivierungskonfigurationen, verbunden mit dem besagten Speicher zum Speichern der Funktionsparameter zu deren Änderung als Antwort auf ein vorbestimmtes, mit den besagten Aktivierungen verbundenes Kriterium.

8. Anlage laut Anspruch 7, mit dem Merkmal, daß die besagten Erkennungsmittel an sich folgendes beinhalten :

- Mittel zur Bereitstellung einer zufälligen Zahl innerhalb eines vorbestimten digitalen Satzes;
- Mittel zur Auswahl der Zuteilungsklasse, durch die Division des besagten Satzes in aufeinanderfolgende Intervalle entsprechend jeder Klasse und jeweils proportional zu den besagten Bewertungsfaktoren, und daraufhin durch Auswahl der dem der Faktoren entsprechenden Klasse, in dem sich die bereitgestellte Zufallszahl befindet.

**Claims**

1. A learning method for a neural network (21) for the classification (R) of vectors in a given number of classes. characterized in that it comprises the following steps:

(A) a step for performing a stochastic labelling by determining, in response to successive presentation of test vectors constituting a learning base to the inputs (E) of said network, the configuration of output activations of the network, each of which is associated with a respective one of said test vectors and assigning, as a function of the mutual correlation of said configurations, each of said test vectors to one of said classes;

(B) a step ($F_1$, $F_2$) for intensifying the effect of the consecutive classification on the configurations thus determined by modification of the operational parameters of the network in response to a predetermined criterion which is linked to said activations.

2. a method as claimed in Claim 1, characterized in that the mutual correlating of the output activations of each configurations in the labelling step comprises the following sub-steps:

- defining weighting factors associated with each respective class as a function of the activation values;
- assigning test vectors to each class by randomizing where the probabilities of assignment of the vectors to said classes are linked to said weighting factors.

3. A method as claimed in one of the Claims 1 or 2, characterized in that the intensifying step comprises the following sub-steps:

- new determination of new configurations of activations associated with said respective test vectors in response to a new successive presentation, but in random order, of the test vectors thus classified to the inputs of said network;
- modifying, for each test vector thus presented, the parameters of the network as a function of said configurations so as to increase the differences therebetween.

4. A method as claimed in Claim 3, characterized in that at the end of the intensifying step the definitive assignment of a test vector to a respective class is performed as a function of the respective configuration in which at least one of the output activations has a value which is larger than that of the other activations of the same configurations.

5. A method as claimed in one of the Claims 1 to 4, characterized in that the predetermined criterion linked to the activations comprises the comparison of each output activation of said respective configurations with a threshold.

6. A method as claimed in one of the Claims 1 to 5, characterized in that the group of labelling and intensifying steps is preceded by a pretreatment step for transforming the test vector space into a space of finite dimensions.

7. A vector classification device, characterized in that it comprises:

- a neural network (21) comprising inputs (E) for the successive presentation of said vectors, outputs (L) for the corresponding supply for output activations in such a manner that a configuration of activations is obtained on said outputs in association with a vector present on said inputs, and a memory for storing the operational parameters of said network;
- stochastic labelling means (30, 31) which are connected to said outputs on the one hand in order to supply, in response to a mutual correlating of the output activations of each configuration, weighting factors which are associated with each reach respective class possible for said vectors, and on the other hand for assigning each vector to a class by randomizing where the probabilities of assignment of the vectors to said classes are linked to said weighting factors;
- means (12) for intensifying the effect of consecutive classification on said configurations of activations, said means being connected to said memory for storing the operational parameters in order to modify these parameters in response to a predetermined criterion linked to said activations.

8. A device as claimed in Claim 7, characterized in that said labelling means themselves comprises:

- means for supplying a random number that lies within a predetermined range;
- means for selecting the assignment class by dividing said range into consecutive intervals which correspond to each class and are proportional to said respective weighting factors, followed by selection of the class which corresponds to that one of the intervals in which the random number supplied is contained.

$$Y = f\left(\sum_1^N w_i\, x_i - S\right)$$

FIG.1

FIG.2